# EUROPEAN PATENT SPECIFICATION

(11) **EP 2 473 747 B1**
(45) Date of publication and mention of the grant of the patent: **23.03.2016**
(21) Application number: 10752221.1
(22) Date of filing: 20.08.2010
(51) Int. Cl.: F16B 19/10, B21J 15/36, B21J 15/04

(54) **BLIND RIVET**
BLINDNIET
RIVET AVEUGLE

(30) Priority: 24.08.2009 US 236270 P
(43) Date of publication of application: 11.07.2012
(73) Proprietor: Newfrey LLC, Newark, Delaware 19711 (US)
(72) Inventor: JONES, Steven V., Lichfield, Stattordshire WS14 9SW (GB); SMITH, Daniel R., Kidderminster Worcestershire DY10 1XH (GB)
(74) Representative: Haar, Lucas Heinz Jörn
(86) International application number: PCT/US2010/046111
(87) International publication number: WO 2011/028440

(56) References cited:
- EP-A1- 0 841 491
- WO-A1-2006/128652
- FR-A- 724 509
- JP-A- 8 086 304
- JP-A- H1 113 723
- JP-A- 2004 286 088
- US-A- 4 164 807
- US-A- 4 405 273
- US-A1- 2003 123 949
- US-A1- 2009 031 549

## Description

### BACKGROUND AND SUMMARY

The present invention relates to blind rivets, and relates particularly to a blind rivet having a mandrel with a deformable mandrel head.

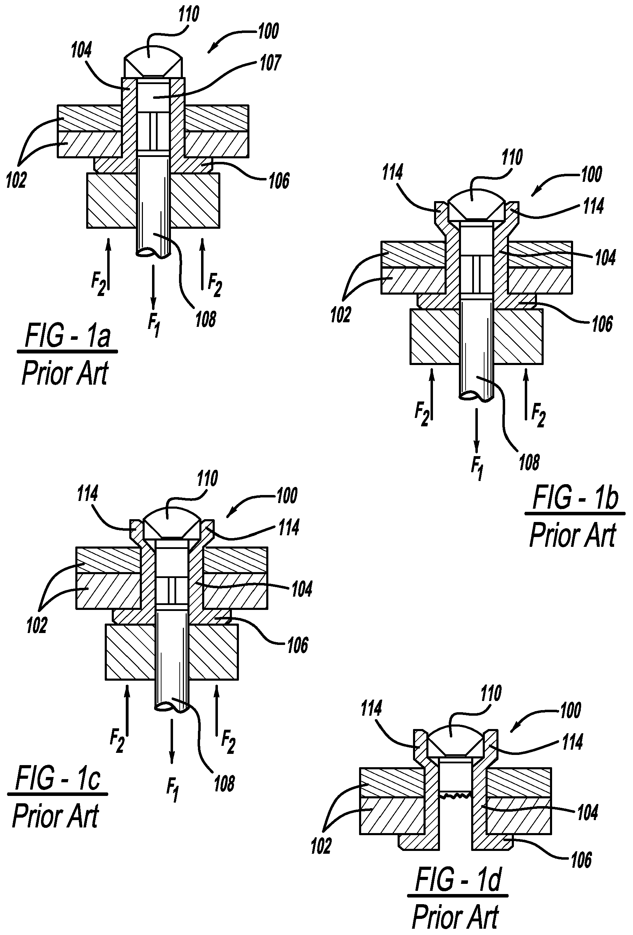

Manufacturing processes such as automotive manufacturing processes use blind rivets as a means of joining parts together since this is a cost effective method avoiding costly and labour intensive tasks which arise when nut and bolt or screw fastenings are used. Blind rivets, which are well known in the art, are used to attach two pieces of material together by means of access to one side of the material. Figures 1 a-d illustrate a blind rivet 100, known as a break stem rivet, used to join together two pieces of material 102. The blind rivet 100 has a cylindrical rivet body portion 104 with a flange 106 at one end. A mandrel 107, which has an elongated mandrel stem 108 and a head portion 110 at one end, is fed through the rivet body portion 104 such that the head portion 110 of the mandrel 107 engages the opposite end of the rivet body portion 104 to that from which the flange 106 extends.

With reference to Figure 1a the blind rivet 100 is fed through two overlapping apertures in the pieces of material 102 to be joined together such that the flange 106 engages one of the pieces of material 102. A force F1 is applied to the mandrel stem 108 in a direction away from the pieces of material 102, and a force F2 is also applied to the flange portion 106 in an opposite direction to that of force F1. With reference to Figures 1b and 1 c, the force F1 applied to the mandrel stem 108 causes the mandrel head 110 to exert a force on the rivet body portion 104 of the blind rivet 100. Such a force causes deformation of the rivet body portion 104 as the mandrel head 110 is pulled towards the pieces of material 102 being joined together, resulting in the creation of an additional flange portion 114.

The mandrel head 110 is pulled through the rivet body portion 104 of the blind rivet 100 until the additional flange portion 114 engages the material 102. Typically the mandrel head 110 is made of harder material than the mandrel stem 108 such that the mandrel stem 108 breaks away from the mandrel head 110 on further application of the force F1 after the additional flange portion 114 engages the material 102. Following this process the two pieces of material 102 are therefore joined together and held in place by the flange 106 and additional flange portion 114.

Pull through blind rivets are also known in the art. Pull through rivets differ from break stem rivets described also in that the mandrel stem does not break away from the mandrel head, and the mandrel head is pulled entirely through the rivet body portion of the blind rivet, and is disposed of with the mandrel stem. U.S. Patent No. 4,497,603 discloses such a pull through blind rivet.

JP 8 086304 A shows the features of the preamble of claim 1.

A problem with conventional break stem and pull through blind rivets, however, is that it is difficult to reliably join pieces of material having dissimilar sized apertures extending therethrough. With further reference to Figure 1 d, for example, if one of the pieces of material 102 had a slightly wider aperture than the other, the rivet body portion 104 of the blind rivet 100 would not engage the entirety of the inner surface defined by the wider aperture. This may then allow the piece of material having the slightly wider aperture to move in a transverse direction. Conventionally this problem would be rectified by drilling a wider aperture in the piece of material 102 having the smaller aperture such that the apertures in the two pieces of material 102 to be joined are of substantially the same size. This complicates and increases the cost of a manufacturing process. Preferred embodiments of the present invention seek to overcome one or more of the above disadvantages of the prior art.

According to the present invention there is provided a blind rivet with the features of claim 1.

The use of a deformable mandrel head provides the advantage that a blind rivet can be used to fixably attach pieces of material together having dissimilar sized apertures extending therethrough. In another preferred embodiment said mandrel head has a tapering cross section. In a preferred embodiment said mandrel head has a substantially part-conical cross-section. This allows the mandrel head to slightly enter the rivet body portion prior to its deformation providing the advantage that the rivet body portion is evenly deformed around the aperture extending through it.

In a further preferred embodiment said elongated portion has a plurality of first ribs arranged on an outer surface thereof for engaging an aperture in a work piece. This increases the grip of the rivet on the work piece thereby providing the advantage of minimizing rotation of the work piece relative to the rivet and vice versa. In a preferred embodiment a plurality of said first ribs extends substantially parallel to a longitudinal axis of said elongated portion.

In another preferred embodiment said flange has a plurality of second ribs arranged thereon for engaging an edge of an aperture in a work piece. This increases the grip of the rivet on the work piece thereby providing the advantage of minimizing rotation of the work piece relative to the rivet and vice versa. In a further preferred embodiment a plurality of said second ribs extend transversely to a longitudinal axis of said elongated portion. In a preferred embodiment said bore extends the entire length of said elongated portion.

### BRIEF DESCRIPTION OF THE DRAWINGS

Preferred embodiments of the invention will now be described, by way of example only and not in any limitative sense, with reference to the accompanying drawings in which:
Figure 1 illustrates a plurality of cross-sectional views of a break stem blind rivet of the prior art in use;
Figure 2 illustrates a perspective view of a blind rivet of the present invention;
Figure 3 illustrates a plurality of cross sectional views of the blind rivet in Figure 2 in use; and
Figure 4 illustrates a plurality of perspective views of different rivet body portions which may be used in the present invention.

### DETAILED DESCRIPTION

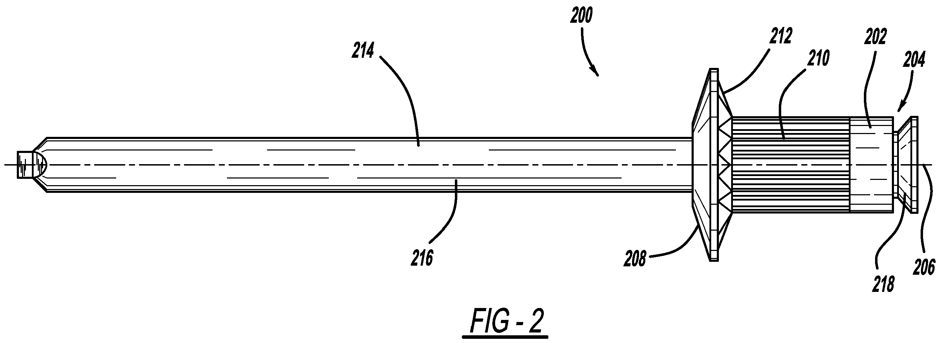

Figure 2 illustrates a pull through blind rivet 200 embodying the present invention. The blind rivet 200 has a cylindrical rivet body portion 202 having a bore 204 extending entirely through it along an axis 206. The rivet body portion 202 has a flange portion 208 extending from it at one end, and has a partially ribbed outer surface 210. The flange portion 208 also has a ribbed surface 212 on the side of the flange facing the direction of the rivet body portion 202. A mandrel 214 having an elongated mandrel stem 216 and a deformable mandrel head 218 extends through the bore 204 in the rivet body portion 202. The mandrel head 218 is wider than the bore 204 extending through the rivet body portion 202. The mandrel is secured to the rivet body prior to setting by an interference fit between the stem and the bore of the rivet body.

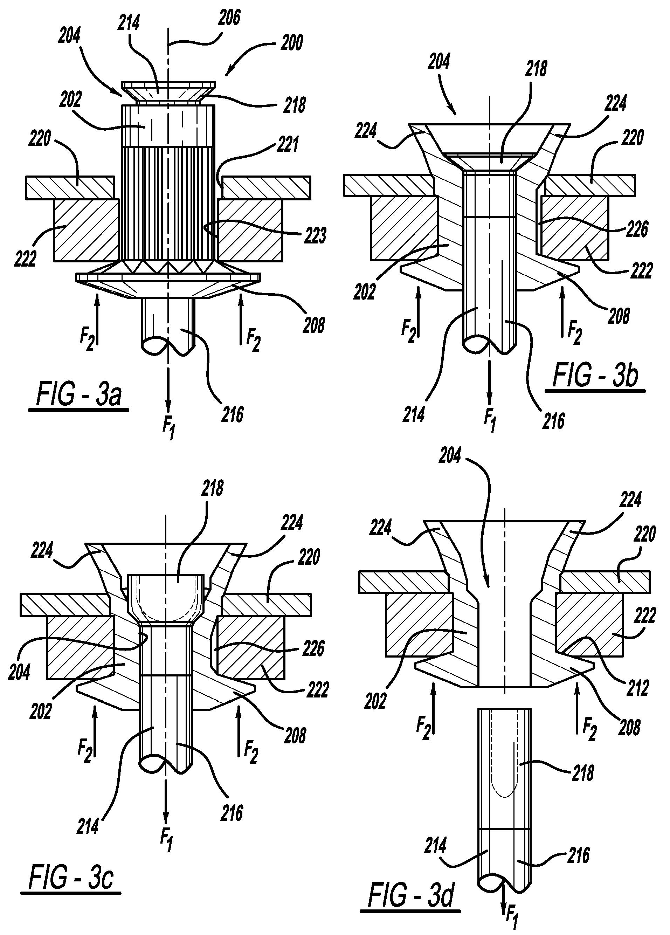

The operation of the blind rivet 200 in Figure 2, will now be described with reference to Figure 3. As shown in Figure 3a, the pieces of material 220, 222 having large and small apertures 221, 223, respectively extending therethrough, are placed in engagement with one another such that the apertures extending therethrough are aligned. The blind rivet 200 is then fed through the aligned apertures in the pieces of material 220, 222 such that the flange portion 208 abuts the surface of the material 222 having the smaller of the two apertures. A force F1 is then applied to the mandrel stem 216 in a direction away from the rivet body portion 202 along axis 206, and a force F2 is applied to the flange portion 208 in the direction of the rivet body portion 202 in a direction opposite to that of force F1. The force F1 pulls the mandrel stem 216 away from the rivet body portion 202 and causes the mandrel head 218 to be pulled into the bore 204 extending through the rivet body portion 202. The tapered surface on the side of the mandrel head 218 adjacent the mandrel stem 216 is brought into engagement with the rivet body portion 202 as the mandrel 214 is pulled away from the rivet body portion 202.

Referring to Figure 3b, as the mandrel 214 is pulled away from the rivet body portion 202, the mandrel head 218 exerts a force on the mandrel body portion 202 which thereby causes it to deform, resulting in the creation of an additional flange portion 224. As the mandrel head 218 is pulled further through the bore 204 in the rivet body portion 202, the situation illustrated in Figure 3b occurs, where the additional flange portion 224 comes into engagement with the surface of material piece 220. At this point, the pieces of material 220, 222 are joined and held together by flange portion 208 and the additional flange portion 224 of the tail or blind end of the rivet body. However there exists a gap 226 between the rivet body portion 202 and the inner surface of the apertures extending through both of the pieces of material 220, 222.

In order for the mandrel head 218 to be pulled further through the bore 204 in the rivet body portion 202, the mandrel head 218 must deform so as to fit through the larger aperture in material piece 220, which is narrower than the width of the mandrel head in its initial state. Figure 3c illustrates the mandrel head 218 having deformed a sufficient amount to fit through the larger aperture in material piece 220. As the mandrel head 218 is pulled through this aperture, the mandrel body portion 202 deforms further such that it is brought into engagement with the inner surface defined by the aperture in material piece 220. At this point however, there still exists a gap 226 between the rivet body portion 202 and the inner surface of the smaller aperture extending through material piece 222.

As the mandrel head 218 is pulled further through the bore 204 in the rivet body portion 202, the mandrel head 218 deforms further such that it can fit through the smaller aperture in material piece 222, which is narrower than the width of the mandrel head 218 after being pulled through the larger aperture in material piece 220. The mandrel head 218 is therefore deformed a sufficient amount such that it may be pulled through the smaller aperture in material piece 222, and as it is pulled through this aperture, the mandrel body portion 202 is again further deformed such that it is brought into engagement with the inner surface defined by the smaller aperture in material piece 222. The mandrel stem 216 and mandrel head 218 are then pulled such that they are completely separated from the rivet body portion 202 as illustrated in Figure 3d.

Following this process, the two pieces of material 220, 222 are joined together in such a way that they can not move relative to each other. The ribs 210 (see Figure 2) on the outer surface of the rivet body portion 202 engage the inner surfaces of the apertures in both material pieces 220, 222 so as to increase the grip of the rivet body portion 202 on the pieces of material 220, 222 and thereby prevent rotation of the joined pieces of material 220, 222 about the rivet body portion 202. As the mandrel head 218 is pulled out of the bore 204 in the rivet body portion 204, the outer surface of the rivet body portion 202, and therefore the flange 208 extending from it, deform in such a way that the ribbed surface 212 (see Figure 2) of the flange 208 is forced against the material piece 222 thereby preventing rotation of the rivet body portion 202 relative to the material piece 222. The rivet body is thereby permanently fastened to the workpieces during normal use.

If the pieces of material being joined by a blind rivet 200 of the present invention are electrical conductors, the blind rivet 200 is able to form a joint between the two pieces of material which has earth or grounding continuity. For example, workpiece 220 is a conductive metal eyelet attached to an electrical wire and workpiece 222 is a stamped steel panel of an automotive vehicle or electronic cabinet, such as a computer or server chassis. The panel workpiece 222 acts as a grounded electrical conductor if electricity flows to it from conductive eyelet 220. Alternately, workpiece 222 may be the eyelet and workpiece 220 may be the grounding panel whereby ribs 212 of flange 208 dig into and deter eyelet 222 from rotation. In these examples, it is desireable to deter rotation of the conductive eyelet relative to the adjacent panel by way of the blind rivet ribs 210 and 212.

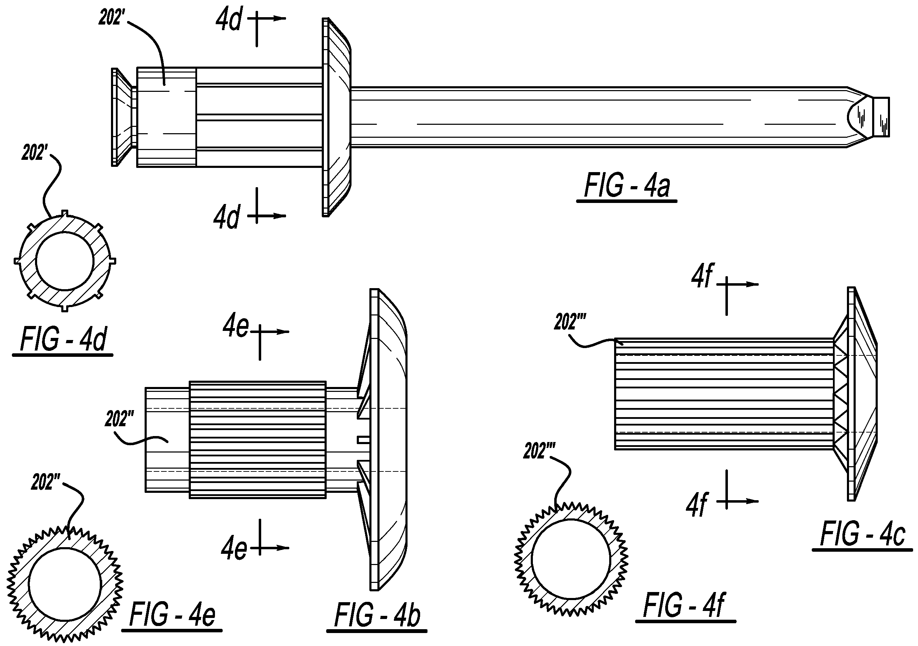

Figure 4 illustrates various other rivet body portion 202 outer surface configurations. In particular, Figures 4a and 4d illustrate a rivet body portion 202' having a partially splined outer surface, and Figures 4b, 4c, 4e and 4f, illustrate a rivet body portion having a partially (202") and entirely (202"') ribbed outer surface, respectively. In the embodiment of Figures 4b and 4e, the outer surface of the rivet body section is free of discontinuities (i.e., circular-cylindrically smooth) between the axially elongated ribs on the body section and the laterally elongated ribs on the underside of the flange.

It will be appreciated by persons skilled in the art that the above embodiments have been described by way of example only and not in any limitative sense, and that various alterations and modifications are possible without departure from the scope of the invention as defined by the appended claims. For example the blind rivet of the present invention may be used to join more than two pieces of material together.

## Claims

1. A blind rivet assembly comprising:
a rivet body (202) including a middle section having a substantially cylindrical through-bore (204) at least prior to blind rivet setting, a flange (208) laterally extending from a tool-end of the middle section, and a set of ribs (212) extending from an underside of the flange;
a mandrel (214) including an axially elongated stem (216) and a laterally enlarged head (218) extending adjacent an end of the stem, the stem extending through the bore of the rivet body prior to blind rivet setting, **characterized in that** the head deforms during blind rivet setting as it is pulled completely through the rivet body; and
at least two workpieces (220,222) fastened together by the rivet, internal apertures of the workpieces (221,223) having aligned but intentionally different lateral dimensions, the flange abutting a surface of the workpiece (222) having a smaller one of the lateral dimensions.

2. The blind rivet assembly of Claim 1, further comprising an outer surface of the middle section of rivet body which is laterally expanded in an axially stepped manner to fill the internal apertures when the mandrel head is pulled through the rivet body.

3. The blind rivet assembly of Claim 2, wherein at least one of the workpieces acts as a ground and conducts electricity.

4. The blind rivet assembly of Claim 2, wherein one of the workpieces is an electrical eyelet and is deterred from rotation by engagement thereof by the ribs.

5. The blind rivet assembly of Claim 2, further comprising a second set of axially elongated ribs (210) projecting from an outer surface of the rivet body at least prior to rivet setting.

6. The blind rivet assembly of Claim 5, wherein the outer surface of the rivet body (202) is circular-cylindrically smooth and free of discontinuities between the second set of axially elongated ribs (210) and the ribs (212) on the flange.

7. The blind rivet assembly of Claim 5, wherein the second set of axially elongated ribs (210) are parallel to an elongated mandrel axis prior to rivet setting.

8. The blind rivet assembly of Claim 1, further comprising a second set of axially elongated ribs radially projecting from the blind rivet body being parallel to an elongated mandrel axis prior to rivet setting, the second set of ribs engaging the apertures of the workpieces.

9. The blind rivet assembly of Claim 2, wherein the flange and a laterally expanded tail section (224) of the rivet body axially extend beyond outside surfaces of the fastened workpieces after rivet setting, the ribs of the flange engaging the adjacent one of the workpieces to deter rotational movement therebetween.

10. The blind rivet assembly of Claim 1, wherein the middle section of the rivet body has an axial step in an outer surface thereof between a laterally expanded blind tail section (224) and the flange, after rivet setting.

11. The blind rivet assembly of Claim 1, wherein each of the ribs (212) is angled so as to axially project a greater distance from the flange closer to the middle section, and the ribs of the flange also contact against the middle section of the rivet body.

12. The blind rivet assembly of Claim 1, wherein the blind end of the rivet body outwardly and rearwardly projects away from the flange and the middle section, after rivet setting.

13. The blind rivet assembly of Claim 1, wherein the mandrel (214) is secured to the rivet body by an interference fit prior to rivet setting.

14. The blind rivet assembly of Claim 1, further comprising axially elongated ribs (210) being parallel to an elongated mandrel axis prior to rivet setting and each of the ribs having a triangular cross-sectional shape prior to rivet setting.

15. The blind rivet assembly of Claim 1, further comprising:
an outer surface of the middle section of rivet body which is laterally expanded in an axially stepped manner to fill the larger one (221) of the internal apertures followed by the smaller one (223) of the internal apertures when the mandrel head (218) is pulled through the rivet body; and
a laterally expanded blind end (224) of the blind rivet body axially extending beyond the adjacent outside surface of fastened workpieces after rivet setting;
wherein the blind end of the rivet body outwardly and rearwardly projects away from the flange and the middle section after rivet setting, and the mandrel (214) is secured to the rivet body by an interference fit prior to rivet setting.

## Patentansprüche

1. Blindnietzusammenbau, umfassend:
einen Nietkörper (202) mit einem mittleren Abschnitt, der eine im wesentlichen zylindrische Durchgangsbohrung (204) wenigstens vor dem Setzen des Blindniets aufweist, einen von einem Werkzeugangriffsende des mittleren Abschnitts sich seitwärts erstreckenden Flansch (208), und eine sich von einer Unterseite des Flansches erstreckende Reihe von Rippen (212);
einen Dorn (214) mit einem sich in axialer Richtung erstreckenden Längsschaft (216) und einem seitwärts erweiterten und sich angrenzend an ein Ende des Schaftes erstreckenden Kopf (218), wobei sich der Schaft vor dem Setzen des Blindniets durch die Bohrung des Nietkörpers erstreckt,
**dadurch gekennzeichnet, dass** sich der Kopf beim Setzen des Blindniets verformt, während er vollständig durch den Nietkörper hindurch gezogen wird; und
wenigstens zwei Werkstücke (220, 222) durch den Niet miteinander verbunden werden, wobei innere Öffnungen (221, 223) der Werkstücke miteinander fluchtende, jedoch gewollt unterschiedliche seitliche Abmessungen aufweisen, wobei der Flansch an einer Fläche des Werkstücks (222) mit der kleineren der seitlichen Abmessungen zur Anlage gelangt.

2. Blindnietzusammenbau nach Anspruch 1, der ferner eine Außenfläche des mittleren Abschnitts des Nietkörpers aufweist, die in axial abgestufter Weise seitwärts erweitert ist, um die inneren Öffnungen auszufüllen, wenn der Dornkopf durch den Nietkörper hindurch gezogen wird.

3. Blindnietzusammenbau nach Anspruch 2, wobei wenigstens eines der Werkstücke als Erdung wirkt und stromführend ist.

4. Blindnietzusammenbau nach Anspruch 2, wobei eines der Werkstücke eine elektrische Öse ist und mittels Eingreifen der Rippen drehfest gehalten ist.

5. Blindnietzusammenbau nach Anspruch 2, der ferner eine zweite Reihe axial ausgerichteter Längsrippen (210) umfasst, die wenigstens vor dem Setzen des Niets von einer Außenfläche des Nietkörpers vorstehen.

6. Blindnietzusammenbau nach Anspruch 5, wobei die Außenfläche des Nietkörpers (202) zwischen der zweiten Reihe axial ausgerichteter Längsrippen (210) und den Rippen (212) an dem Flansch kreiszylindrisch glatt und frei von Unterbrechungen ist.

7. Blindnietzusammenbau nach Anspruch 5, wobei die zweite Reihe axial ausgerichteter Längsrippen (210) vor dem Setzen des Niets parallel zu einer Längsachse des Dorns verläuft.

8. Blindnietzusammenbau nach Anspruch 1, der weiterhin eine zweite Reihe axial ausgerichteter Längsrippen umfasst, die von dem Blindnietkörper radial vorstehen und sich vor dem Setzen des Niets parallel zu einer Längsachse des Dorns erstrecken, wobei die zweite Reihe von Rippen in die Öffnungen der Werkstücke eingreift.

9. Blindnietzusammenbau nach Anspruch 2, wobei der Flansch und ein seitwärts erweiterter Endabschnitt (224) des Nietkörpers sich nach dem Setzen des Niets axial über Außenflächen der befestigten Werkstücke erstrecken, wobei die Rippen des Flansches in das angrenzende der Werkstücke eingreifen, um eine relative Drehbewegung zu verhindern.

10. Blindnietzusammenbau nach Anspruch 1, wobei nach dem Setzen des Niets der mittlere Abschnitt des Nietkörpers eine axiale Stufe in einer Außenfläche zwischen einem seitwärts erweiterten blinden Endabschnitt (224) und dem Flansch aufweist.

11. Blindnietzusammenbau nach Anspruch 1, wobei die einzelnen Rippen (212) derart abgewinkelt angeordnet sind, dass sie nahe an dem mittleren Abschnitt um ein größeres Maß von dem Flansch axial hervorstehen, und die Rippen des Flansches auch an dem mittleren Abschnitt des Nietkörpers anliegen.

12. Blindnietzusammenbau nach Anspruch 1, wobei nach dem Setzen des Niets das blinde Ende des Nietkörpers sich von dem Flansch und dem mittleren Abschnitt nach außen und nach hinten weg erstreckt.

13. Blindnietzusammenbau nach Anspruch 1, wobei vor dem Setzen des Niets der Dorn (214) an dem Nietkörper durch eine Presspassung befestigt ist.

14. Blindnietzusammenbau nach Anspruch 1, der ferner axial ausgerichtete Längsrippen (210) umfasst, die sich vor dem Setzen des Niets parallel zu einer Längsachse des Dorns erstrecken, und wobei die einzelnen Rippen vor dem Setzen des Niets eine dreiecksförmige Querschnittsform aufweisen.

15. Blindnietzusammenbau nach Anspruch 1, der weiterhin umfasst:
eine Außenfläche des mittleren Abschnitts des Nietkörpers, die in axial abgestufter Weise seitwärts erweitert ist, um die größere (221) der inneren Öffnungen, gefolgt von der kleineren (223) der inneren Öffnungen, auszufüllen, wenn der Dornkopf (218) durch den Nietkörper hindurch gezogen wird; und
ein seitwärts erweitertes blindes Ende (224) des Blindnietkörpers, das sich nach dem Setzen des Niets über die angrenzende Außenfläche befestigter Werkstücke hinaus erstreckt;
wobei nach dem Setzen des Niets das blinde Ende des Nietkörpers sich von dem Flansch und dem mittleren Abschnitt nach außen und nach hinten weg erstreckt, und der Dorn (214) vor dem Setzen des Niets an dem Nietkörper durch eine Presspassung befestigt ist.

## Revendications

1. Ensemble de rivet aveugle comprenant :
un corps de rivet (202) incluant une section médiane présentant un trou débouchant sensiblement cylindrique (204) au moins avant la pose du rivet aveugle, une bride (208) s'étendant latéralement depuis une extrémité d'outil de la section médiane et un ensemble de nervures (212) s'étendant depuis un côté inférieur de la bride ;
un mandrin (214) incluant une tige axialement allongée (216) et une tête latéralement agrandie (218) s'étendant de manière adjacente à une extrémité de la tige, la tige s'étendant par le trou du corps de rivet avant la pose du rivet aveugle, **caractérisé en ce que** la tête se déforme pendant la pose du rivet aveugle lorsqu'elle est tirée complètement par le corps de rivet ; et
au moins deux pièces de travail (220, 222) fixées ensemble par le rivet, des ouvertures internes des pièces de travail (221, 223) ayant des dimensions latérales alignées mais intentionnellement différentes, la bride butant contre une surface de la pièce de travail (222) présentant une dimension plus petite des dimensions latérales.

2. Ensemble de rivet aveugle selon la revendication 1, comprenant en outre une surface extérieure de la section médiane du corps de rivet qui est latéralement étendue de manière axialement étagée pour remplir les ouvertures internes lorsque la tête de mandrin est tirée par le corps de rivet.

3. Ensemble de rivet aveugle selon la revendication 2, dans lequel au moins l'une des pièces de travail agit comme une masse et conduit de l'électricité.

4. Ensemble de rivet aveugle selon la revendication 2, dans lequel l'une des pièces de travail est un oeillet électrique et est empêchée de tourner par engagement de celui-ci par les nervures.

5. Ensemble de rivet aveugle selon la revendication 2, comprenant en outre un second ensemble de nervures axialement allongées (210) faisant saillie d'une surface extérieure du corps de rivet au moins avant la pose du rivet.

6. Ensemble de rivet aveugle selon la revendication 5, dans lequel la surface extérieure du corps de rivet (202) est lisse de manière cylindrique et circulaire et exempte de discontinuités entre le second ensemble de nervures axialement allongées (210) et les nervures (212) sur la bride.

7. Ensemble de rivet aveugle selon la revendication 5, dans lequel le second ensemble de nervures axialement allongées (210) est parallèle à un axe de mandrin allongé avant la pose du rivet.

8. Ensemble de rivet aveugle selon la revendication 1, comprenant en outre un second ensemble de nervures allongées axialement en saillie radiale du corps de rivet aveugle parallèle à un axe de mandrin allongé avant la pose du rivet, le second ensemble de nervures engagent les ouvertures des pièces de travail.

9. Ensemble de rivet aveugle selon la revendication 2, dans lequel la bride et une section arrière latéralement étendue (224) du corps de rivet s'étendent axialement au-delà des surfaces extérieures des pièces de travail fixées après la pose du rivet, les nervures de la bride engageant l'une pièce adjacente des pièces de travail pour empêcher le mouvement de rotation entre elles.

10. Ensemble de rivet aveugle selon la revendication 1, dans lequel la section médiane du corps de rivet a un étage axial dans une surface extérieure de celle-ci entre une section arrière aveugle étendue latéralement (224) et la bride après la pose du rivet.

11. Ensemble de rivet aveugle selon la revendication 1, dans lequel chacune des nervures (212) est anglée de sorte à faire saillie axialement d'une plus grande distance de la bride plus près de la section médiane et les nervures de la bride touchent aussi contre la section médiane du corps de rivet.

12. Ensemble de rivet aveugle selon la revendication 1, dans lequel l'extrémité aveugle du corps de rivet fait saillie vers l'extérieur et l'arrière loin de la bride et de la section médiane après la pose du rivet.

13. Ensemble de rivet aveugle selon la revendication 1, dans lequel le mandrin (214) est fixé au corps de rivet par un ajustement serré avant la pose du rivet.

14. Ensemble de rivet aveugle selon la revendication 1, comprenant en outre des nervures axialement allongées (210) parallèles à un axe de mandrin allongé avant la pose du rivet et chacune des nervures présentant une forme de section transversale triangulaire avant la pose du rivet.

15. Ensemble de rivet aveugle selon la revendication 1, comprenant en outre :
une surface extérieure de la section médiane du corps de rivet qui est latéralement étendue de manière axialement étagée pour remplir une ouverture plus grande (221) des ouvertures internes suivies par la plus petite (223) des ouvertures internes lorsque la tête de mandrin (218) est tirée par le corps de rivet ; et
une extrémité aveugle latéralement étendue (224) du corps de rivet aveugle s'étendant axialement au-delà de la surface extérieure adjacente de pièces de travail fixées après la pose du rivet ;
dans lequel l'extrémité aveugle du corps de rivet fait saillie vers l'extérieur et l'arrière loin de la bride et de la section médiane après la pose du rivet et le mandrin (214) est fixé au corps de rivet par un ajustement serré avant la pose du rivet.
